# EUROPÄISCHE PATENTSCHRIFT

(11) **EP 2 049 217 B1**
(45) Veröffentlichungstag und Bekanntmachung des Hinweises auf die Patenterteilung: **22.06.2011**
(21) Anmeldenummer: 07801597.1
(22) Anmeldetag: 10.08.2007
(51) Int. Cl.: B01D 24/10, B01D 35/30, A47J 31/60, C02F 1/00

(54) **FILTERPATRONE FÜR WASSERFÜHRENDE GERÄTE**
FILTER CARTRIDGE FOR WATER-CONDUCTING UNITS
CARTOUCHE FILTRANTE POUR DES APPAREILS À DÉBIT D'EAU

(30) Priorität: 11.08.2006 DE 102006037913
(43) Veröffentlichungstag der Anmeldung: 22.04.2009
(73) Patentinhaber: Aquis Wasser-Luft-Systeme GmbH, Lindau, 9445 Rebstein (CH)
(72) Erfinder: WAWRLA, Andreas, CH-9443 Widnau (CH)
(74) Vertreter: Roth, Klaus
(86) Internationale Anmeldenummer: PCT/EP2007/007096
(87) Internationale Veröffentlichungsnummer: WO 2008/017497

(56) Entgegenhaltungen:
- WO-A-2006/040120
- WO-A-2007/093360
- DE-U1-202006 010 134
- US-A- 5 744 030

## Beschreibung

Die Erfindung betrifft eine Filterpatrone für einen Wassertank für wasserführende Geräte nach dem Oberbegriff des Anspruchs 1.

Filterpatronen zum Einsetzen z.B. in einen Wasservorratstank einer Getränkemaschine wie einer Espressomaschine oder dergleichen sind in der Regel mit einem Gehäuse ausgestattet, in dem ein aus Filtermaterial gebildetes Filterbett angeordnet ist. Derartige Filterpatronen sind beispielsweise aus der Druckschrift DE 197 17 054 bekannt.

Bei dieser bekannten Filterpatrone wird das Filterbett bzw. die Filterstrecke im Aufstrom von unten nach oben durchströmt. Dies hat zur Folge, dass durch eine Saugpumpe in der entsprechenden Getränkemaschine das Wasser durch die gesamte Filterpatrone gegen den Strömungswiderstand des Filterbettes hin angehoben werden muss. Dabei steht sowohl der Strömungswiderstand des Filterbettes, als auch die Gravitation des Wassers der Strömungsrichtung entgegen.

Aus der WO 2006/040120 A1 ist eine Filterpatrone bekannt, die ein abwärts durchströmtes Filterbett und eine Steigleitung bzw. eine aufwärts durchströmte Kammer stromauf des Filterbetts offenbart.

Aufgabe der Erfindung ist es, eine im Vergleich zum Stand der Technik verbesserte Filterpatrone vorzuschlagen.

Diese Aufgabe wird, ausgehend von einer Filterpatrone der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend umfasst eine erfindungsgemäße Filterpatrone eine im Abstrom zu betreibende Filterstrecke und eine wenigstens im Bereich des Sauganschlusses im Gehäuse der Filterpatrone angeordnete Steigleitung. Das bedeutet insbesondere, dass im Filterbett wenigstens ein in Betrieb von oben nach unten durchströmter Strömungsbereich vorgesehen ist. Das Filterbett bzw. die Filterstrecke kann in diesen Bereichen demnach unter Zuhilfenahme der Gravitation durchströmt werden, sodass der Strömungswiderstand des Filterbettes wenigstens teilweise kompensiert wird.

Vor allem durch die vorteilhafte innere Anordnung der Steigleitung bzw. zumindest des Ansaugbereiches ist diese/dieser wirkungsvoll durch das Gehäuse der Filterpatrone geschützt. Beispielsweise kann es bei der Montage der Filterpatrone gemäß der Erfindung in einem Wassertank oder dergleichen, selbst bei unachtsamem Einbau bzw. Kontakt der Filterpatrone mit dem Gerät bzw. dem Wassertank oder dergleichen zu keiner Beeinträchtigung der Steigleitung bzw. des besonders relevanten Ansaugbereichs kommen. Hierdurch ist das Einströmen des zu filtrierenden Wassers sicher gewährleistet, was die Betriebssicherheit der erfindungsgemäßen Filterpatrone entscheidend erhöht. Dementsprechend einfach, insbesondere dünnwandig kann die Steilgleitung ausgebildet werden.

Eine derart ausgestaltete Filterpatrone stellt die Wasserzufuhr in die Filterpatrone sicher. Auf diese Weise ist eine separate, entsprechend tief angeordnete Wassereintrittsöffnung bei der Filterpatrone entbehrlich. Außerdem ist eine Entleerung eines Wasservorratstanks bis auf Höhe der Wassereintrittsöffnung möglich.

Vorteilhafterweise umfasst die Filterpatrone weiterhin eine Steigleitung, die oberhalb des Filterbettes in der Filterpatrone ausmündet. In dieser Bauform ist die Durchströmung des gesamten Filterbettes im sogenannten Abstromverfahren von oben nach unten möglich, d.h. das gesamte Filterbett wird hierbei unter Zuhilfenahme der Gravitation durchströmt.

Die oberhalb des Filterbettes in der Filterpatrone ausmündende Steigleitung kann dabei in die Filterpatrone integriert werden, sodass sie vollständig im Innern der Patrone verläuft.

Vorzugsweise ist die Steigleitung als Rohreinsatz ausgebildet. Ein Rohreinsatz kann einfach und vorzugsweise separat hergestellt und insbesondere mit der Filterpatrone bzw. mit dem Gehäuse fest verbunden werden. Beispielsweise kann der Rohreinsatz mit dem Gehäuse verklemmt bzw, verspannt und/oder mit dem Anschluss und/oder einer Dichtung der Patrone verbunden bzw. fixiert werden. Gegebenenfalls kann am Gehäuse und/oder am Anschluss und/oder an der Dichtung wenigstens ein Halte- bzw. Klemmelement zum Fixieren des Rohreinsatzes vorgesehen sein. Mit derartigen Maßnahmen kann die Steigleitung einfach realisiert und sicher innerhalb des Gehäuses fixiert werden.

Vorteilhafterweise weist wenigstens im Bereich des Sauganschlusses die Filterpatrone einen im Wesentlichen kreisförmigen Querschnitt auf. Ein entsprechend ausgebildeter Querschnitt ist einfach herzustellen und kann eine vorteilhafte Fixierung der Filterpatrone in einem Wassertank oder dergleichen gewährleisten. Zudem wird hiermit eine Kompatibilität mit bereist handelsüblichen Filterpatronen für Geräte wie Haushaltsmaschinen oder dergleichen erreicht.

Vorzugsweise wird die Filterpatrone mit einer Dichtung versehen, die für den dichten Abschluss der Auslassleitung am bzw. im Anschlusselement des Wasservorratstanks sorgt. Ein solcher dichter Abschluss stellt sicher, dass ausschließlich gefiltertes Wasser die Ausgangsöffnung des Wasservorratstanks erreicht und nicht etwa ungefiltertes Wasser beigemischt wird.

Eine solche Dichtung wird vorteilhafterweise durch eine Axialdichtung für den dichten Abschluss der Auslassleitung am Behälterboden gebildet bzw. die Filterpatrone weist wenigstens eine Axialdichtung zum dichten Abschluss des Sauganschlusses in Richtung der Längsachse der Filterpatrone auf. Eine solche Axialdichtung bietet eine einfache Handhabung, da durch axiales Andrücken der Dichtung z.B. am Behälterboden der erforderliche dichte Formschluss erzielt wird. Reibungskräfte, die beispielsweise beim Anpressen einer Radialdichtung an einen entsprechend geformten radialen Dichtsitz auftreten können, sind hierbei vermieden.

Darüber hinaus ist mit Hilfe einer Axialdichtung problemlos eine definierte Betriebsposition der Filterpatrone gegebenenfalls unter Zuhilfenahme eines Anschlags möglich.

Eine erfindungsgemäße Filterpatrone wird bevorzugt in einem Wasservorratstank eingesetzt, der ein Rückschlagventil aufweist, sodass der Wasservorratstank aus der entsprechenden Getränkemaschine entnehmbar ist, ohne dass Wasser durch dessen Bodenöffnung austreten kann. Der Wasservorratstank kann somit zum Befüllen aus der Maschine entnommen werden.

Vorteilhafterweise kann eine Einströmöffnung bzw. der Einsauganschluss der Patrone außerhalb des durch die Dichtung abgedichteten Bereiches angeordnet werden. Beispielsweise überstreicht die Einströmöffnung bzw. der Einsauganschluss lediglich einen Teil des Umfangs des Gehäuses. Gegebenenfalls ist die Einströmöffnung bzw. der Einsauganschluss als Kreissegment oder Kreisabschnitt, Ringabschnitt oder linsenförmig etc. ausgebildet. Auch sind mehrere Einströmöffnungen bzw. der Einsauganschluss realisierbar, die separat oder gemeinsam weitergeführt bzw. zum Filterbett bzw. zur Filterstrecke geleitet werden.

Vorzugsweise ist wenigstens ein im Wesentlichen ringförmiger Einströmbereich im Gehäuse um die Dichtung bzw. Axialdichtung herum vorgesehen ist. Hiermit wird eine besonders einfache Konstruktion möglich. Zum Beispiel ist mittig und/oder zentral die Ausströmöffnung bzw. der Abfluss für gefiltertes Wasser vorgesehen und vorzugsweise konzentrisch die Axialdichtung und/oder konzentrisch die Einströmöffnung bzw. der Einsauganschluss angeordnet.

Es kann z.B. die Steigleitung frei innerhalb des Gehäuses und/oder innerhalb des Filterbettes angeordnet werden. Hierdurch kann die Steigleitung beispielsweise zusammen mit dem Gehäuse einstückig hergestellt werden, z.B. aus Kunststoff oder dergleichen vorzugsweise spritzgegossen oder ähnlich. Dies verbessert die Wirtschaftlichkeit der Erfindung.

Es ist denkbar, die Steigleitung als Ringmantel, insbesondere konzentrisch, um das Filterbett herum anzuordnen. Hiermit wird bei geringer radialer Ausdehnung ein besonders großer lichter Querschnitt der Steigleitung realisierbar. Dementsprechend kompakt kann die Filterpatrone umgesetzt werden, wobei ein besonders geringer Strömungswiderstand beim Ansaugen erreichbar ist.

Beispielsweise ist die Innenwand der Steigleitung konkav,oder konvex und/oder als Kreisabschnitt ausgebildet. Hiermit kann eine vorteilhafte Anpassung an die räumlichen Verhältnisse erreicht werden.

Vorzugsweise umfasst die Steigleitung ein mechanischer Filter bzw. Sieb, um zu verhindern, dass Filtermaterial aus dem Filterbett bzw. der Filterstrecke durch die Steigleitung aus der Patrone gelangen kann. Zudem wird verhindert, dass Partikel die Filterpatrone beeinträchtigten können.

Das Gerät bzw, die entsprechende Getränkemaschine wird vorteilhafterweise mit einer Saugpumpe versehen, um die zuverlässige Durchströmung der Filterpatrone und somit die zuverlässige Entnahme der gewünschten Wassermenge für das Gerät bzw. die Getränkemaschine sicherzustellen.

Im Falle einer Durchströmung des Filterbetts im Abstrom wird, wie oben angeführt, der Strömungswiderstand des Filterbettes durch die Gravitation wenigstens teilweise kompensiert, sodass die Saugpumpe weniger groß dimensioniert werden muss.

Ein Ausführungsbeispiel der Erfindung ist in der Zeichnung dargestellt und wird anhand der Figuren nachfolgend näher erläutert.

Im Einzelnen zeigt:

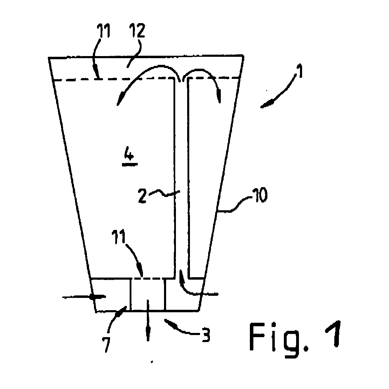

- Figur 1: eine schematische Schnittdarstellung einer ersten Ausführungsform der Erfindung und

In Figur 1 ist eine weitere Filterpatrone 1 dargestellt. Diese weist eine innerhalb des Gehäuses 10 frei stehende Steigleitung 2 und/oder eine vollständig von Filtermaterial bzw. vom Filterbett 4 umgebene Steigleitung 2 auf. Die Steigleitung 2 ist vorzugsweise als Rohreinsatz ausgebildet

Über die Steigleitung gelangt Wasser von oben in ein Filterbett 4, das infolgedessen vollständig im Abstrom durchströmt wird. Vorteilhafterweise ist das Filterbett 4 mittels einem oberen bzw. einströmseitigen Sieb 11 und/oder einem unteren bzw. ausströmseitigen Sieb 11 innerhalb der Patrone 1 sicher gehalten.

Bei dieser Ausführungsform kann beispielsweise ein außenumschließender Anschlusssockel im Behälterboden vorgesehen werden. Alternativ oder in Kombination hierzu kann auch ein nach innen in das Auslassrohr 3 hineinstehender Anschlusssockel vorgesehen werden. Über ein Dichtelement 7, das beispielsweise als Axialdichtung ausgelegt sein kann, wird das Auslassrohr 3 gegenüber der Außenumgebung abgedichtet, sodass lediglich gefiltertes Wasser in die Austrittsöffnung des zugehörigen Tankbodens gelangen kann.

Die Dichtung 7 ist wie oben angegeben als Axialdichtung bzw. als Ringdichtung ausgeführt. Wasser strömt vorzugsweise seitlich im unteren Bereich der Filterpatrone 1 ein und steigt mittels der Steigleitung innen auf, wobei ein (optional vorzusehendes) Sieb 11 das Eindringen von Partikeln wirkungsvoll verhindern kann. Hierbei kann auch die Dichtung 7 ein Eindringen in den Ausströmbereich verhindern bzw. diesen entsprechend abtrennen.

Im oberen Bereich der Filterpatrone 1 strömt das Wasser vorzugsweise durch das Sieb 11 in einen Verteilerbereich 12, der ein möglichst gleichmäßiges bzw, optimales Verteilen des zu filtrierenden Wassers gewährleisten soll. Danach strömt das Wasser durch das Filterbett 4 und durch den Auslassbereich bzw, das Auslassrohr 3 aus der Filterpatrone 1 hinaus.

### Bezugszeichenliste:

- 1: Filterpatrone
- 2: Steigleitung
- 3: Auslassrohr
- 4: Filterbett
- 7: Dichtelement
- 10: Gehäuse
- 11: Sieb
- 12: Verteiler

## Patentansprüche

1. Filterpatrone für einen Wassertank für wasserführende Geräte, insbesondere Haushaltsgeräte wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und -konditionierer oder dergleichen, mit einem Gehäuse (10) und einer Steigleitung (2), zur Zufuhr von zu reinigendem Wasser von oben in eine im Abstrom zu betreibende Filterstrecke (4), und wobei ein in Strömungsrichtung der Filterstrecke nachfolgend angeordneter Sauganschluss an der Filterpatrone zum Ansaugen von Wasser aus der Filterpatrone mit Mitteln zur Erzeugung eines Unterdrucks vorgesehen ist, wobei die Steigleitung (2) wenigstens in dem Bereich des Gehäuses (10), in welchem der Sauganschluss ausgebildet ist, im Gehäuse (10) der Filterpatrone (1) angeordnet ist, **dadurch gekennzeichnet, dass** die Steigleitung (2) innerhalb des Gehäuses (10) freistehend ausgebildet ist.

2. Filterpatrone nach Anspruch 1, **dadurch gekennzeichnet, dass** die Steigleitung (2) als Rohreinsatz (2) ausgebildet ist.

3. Filterpatrone nach einem der vorgenannten Ansprüche **dadurch gekennzeichnet, dass** wenigstens im Bereich des Sauganschlusses (3) die Filterpatrone (1) einen im Wesentlichen kreisförmigen Querschnitt aufweist.

4. Filterpatrone nach einem der vorgenannten Ansprüche **dadurch gekennzeichnet, dass** die Filterpatrone (1) wenigstens eine Axialdichtung (7) zum dichten Abschluss des Sauganschlusses (3) in Richtung der Längsachse der Filterpatrone (1) aufweist.

5. Filterpatrone nach einem der vorgenannten Ansprüche **dadurch gekennzeichnet, dass** ein im Wesentlichen ringförmiger Einströmbereich im Gehäuse (10) um die Axialdichtung (7) herum vorgesehen ist.

6. Wasservorratstank für eine Getränkemaschine, wie eine Espressomaschine oder dergleichen, **dadurch gekennzeichnet, dass** eine Filterpatrone (1) nach einem der vorgenannten Ansprüche vorhanden ist.

7. Getränkemaschine, insbesondere Haushaltsgeräte wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und -konditionierer oder dergleichen, **dadurch gekennzeichnet, dass** ein Wasservorratstank nach dem vorgenannten Anspruch vorgesehen ist.

8. Getränkemaschine nach dem vorgenannten Anspruch, **dadurch gekennzeichnet, dass** eine Saugpumpe zum Ansaugen von Wasser aus dem Wasservorratstank über die Filterpatrone (1) vorgesehen ist.

## Claims

1. Filter cartridge for a water tank for water-conducting units, in particular domestic appliances such as drinks machines, in particular coffee machines, drinking water dispensers, cooking and baking appliances, steam appliances, in particular steam irons, steam cleaners, high-pressure cleaners, air purifiers and conditioners or the like, comprising a housing (10) and a riser pipe (2), for supplying water to be cleaned from above into a filter section (4) to be operated downstream, and wherein a suction connection arranged downstream in the flow direction of the filter section is provided on the filter cartridge for suctioning water out of the filter cartridge with means for generating low pressure, wherein the riser pipe (2) is arranged at least in the region of the housing (10) where the suction connection is formed in the housing (10) of the filter cartridge (1), **characterised in that** the riser pipe (2) is designed to be freestanding inside the housing (10).

2. Filter cartridge according to claim 1, **characterised in that** the riser pipe (2) is designed as a pipe insert (2).

3. Filter cartridge according to any one of the preceding claims, **characterised in that** at least in the region of the suction connection (3) the filter cartridge (1) has a substantially circular cross section.

4. Filter cartridge according to any one of the preceding claims, **characterised in that** the filter cartridge (1) comprises at least one axial seal (7) for sealing the suction connection (3) in the direction of the longitudinal axis of the filter cartridge (1).

5. Filter cartridge according to any one of the preceding claims, **characterised in that** a substantially annular inflow section in the housing (10) is provided around the axial seal (7).

6. Water storage tank for a drinks machine, such as an espresso machine or the like, **characterised in that** a filter cartridge (1) according to one of the preceding claims is provided.

7. Drinks machine, in particular domestic appliances such as drinks machines, in particular coffee machines, drinking water dispensers, cooking and baking appliances, steam appliances, in particular steam irons, steam cleaners, high-pressure cleaners, air purifiers and conditioners or the like, **characterised in that** a water storage tank is provided according to the preceding claim.

8. Drinks machine according to the preceding claim, **characterised in that** a suction pump is provided for suctioning water out of the water storage tank via the filter cartridge (1).

## Revendications

1. Cartouche filtrante pour le réservoir d'eau d'un appareil débitant de l'eau, notamment des appareils domestiques tels que des distributeurs automatiques de boisson, notamment des machines à café automatiques, des distributeurs d'eau potable, des appareils de cuisson, des appareils à vapeur notamment des fers à vapeur, des appareils de nettoyage à la vapeur, des appareils de nettoyage à haute pression, des filtres à air et des conditionneurs d'air ou analogues, comprenant un boîtier (10) et une colonne montante (2) pour fournir de l'eau à filtrer, par le dessus dans un chemin de filtre (4) fonctionnant par flux descendant, et
- un branchement d'aspiration étant prévu en aval du chemin de filtre dans le sens de passage sur la cartouche de filtre pour aspirer l'eau de la cartouche de filtre avec des moyens générant une dépression,
- la colonne montante (2) étant réalisée au moins dans la zone du boîtier (10) dans laquelle il y a le branchement d'aspiration, dans le boîtier (10) de la cartouche filtrante (1),
cartouche **caractérisée en ce que**
la colonne montante (2) est située de manière isolée dans le boîtier (10).

2. Cartouche filtrante selon la revendication 1,
**caractérisée en ce que**
la colonne montante (2) est en forme d'insert tubulaire (2).

3. Cartouche filtrante selon l'une des revendications précédentes,
**caractérisée en ce qu'**
au moins dans la zone du branchement d'aspiration (3), la cartouche filtrante (1) a une section essentiellement circulaire.

4. Cartouche filtrante selon l'une des revendications précédentes,
**caractérisée en ce que**
la cartouche filtrante (1) comporte au moins un joint axial (7) pour fermer de manière étanche le branchement aspirant (3) dans la direction de l'axe longitudinal de la cartouche filtrante (1).

5. Cartouche filtrante selon l'une des revendications précédentes,
**caractérisée par**
une zone de forme essentiellement annulaire d'entrée dans le boîtier (10) autour du joint axial (7).

6. Réservoir d'eau pour une machine distributrice de boisson telle qu'une machine expresso ou machine analogue,
**caractérisé par**
une cartouche filtrante (1) selon l'une des revendications précédentes.

7. Machine distributrice de boisson, notamment appareil domestique tel que distributeur automatique de boisson, notamment machine à café automatique, distributeur d'eau potable, appareil de cuisson, appareil à vapeur notamment fer à vapeur, appareil de nettoyage à la vapeur, appareil de nettoyage à haute pression, filtre à air et conditionneur d'air ou appareils analogues,
**caractérisée en ce qu'**
elle comporte un réservoir d'eau selon la revendication précédente.

8. Machine distributrice de boisson selon la revendication précédente,
**caractérisée en ce qu'**
elle comporte une pompe aspirante pour aspirer l'eau du réservoir d'eau à travers la cartouche filtrante (1).
